# EUROPEAN PATENT APPLICATION

(11) **EP 2 741 488 A1**
(43) Date of publication of application: **11.06.2014**
(21) Application number: 12306554.2
(22) Date of filing: 10.12.2012
(51) Int. Cl.: H04N 5/00

(54) **A method of extracting the most significant frames out of a video stream based on aesthetical criterions**

(71) Applicant: Alcatel Lucent, 75007 Paris (FR)
(72) Inventor: Squedin, Sylvain, 91620 NOZAY (FR); Marilly, Emmanuel, 91620 NOZAY (FR); Outtagarts, Abdelkader, 91620 NOZAY (FR); Obled, Corinne, 91620 NOZAY (FR)
(74) Representative: Hervouet, Sylvie

(57) **Abstract**

A method of extracting the most significant frames out of a video stream, comprising the steps of:
- evaluating each frame based on at least one aesthetical criterion, and
- selecting frames based on said evaluation.

A device able to perform said method.

## Description

### TECHNICAL FIELD

The technical field is the one of frame and video stream analysis. The problem addressed here is the one of extracting the most significant frames out of a video stream.

### BACKGROUND

A typical video stream comprises 25 frames per second. With each frame being of a given weight, and a video stream lasting several seconds or minutes or hours, it leads to important weights. Said weights translate in costs when it comes to storage or in costs and time when it comes to transmission.

To better said situation, at least three approaches are possible/known. According to a first approach it is possible to compress each frame so as to reduce its individual weight. Several methods are known to do this and are out of the scope of the present disclosure.

According to a second approach it is possible to reduce the number of frames of a video stream, by keeping only some of them. Since a human visual system cannot process more than 10 to 12 frames per second, a reduction to such a frequency can be applied while still allowing a human to correctly understand the video stream.

According to a third approach key frames are selected from a video stream, the others remaining/kept frames are then compressed by coding differences with respect to a key frame. It can be applied without information loss of with information loss quite unnoticeable by a human.

Several methods of extracting key frames are known. A key frame can be the first frame of each shot. A key frame can be selected based on visual content. A motion analysis can be used, a key frame being selected as the stillest. A clustering approach can be used, a key frame being selected as the one minimizing a similarity with other frames of the same shot while maximizing the similarity with other shots. All these approaches are either computationally expensive or ineffective in capturing salient visual content.

Other possible applications of a method of extracting the most significant frames from a video stream appear in video indexing, summarization, content retrieval and browsing. In such applications a video stream of up to several hours is reduced to a short visual abstract comprising a very limited number of frames, e.g. around ten frames or even only one frame.

For all these applications, since only some of the frames are kept, it is of first importance to keep the most significant ones. A tunable method of extracting able to provide the most meaningful frames and to selectively work from a slight reduction of the number of frames (e.g. from 25 frames/s to 20 or 15 frames/s) to a drastic reduction (1 frame to abstract a whole video stream), is hardly expected.

### SUMMARY

The present disclosure describes a tunable method of extracting the most significant frames out of a video stream, without the disadvantages of prior art approaches. Opposite to all prior approaches, the main paradigm of said method consists in evaluating the significance/the relevance of a frame, based on aesthetical criterions. The idea is to identify the frames satisfying the most some aesthetical criterions, said frames being considered to be carrying stronger messages and thus being more relevant.

Advantageously, said method can be implemented in real time.

An embodiment is directed to a method of extracting the most significant frames out of a video stream, comprising the steps of: evaluating each frame based on at least one aesthetical criterion, and selecting frames based on said evaluation.

According to another feature, said method further comprises, before the evaluating step, a processing step comprising the sub-steps of: extracting at least one subject, being a coherently moving part of the frame, using motion detection, and determining location and size of said subject.

According to another feature, said method further uses a subjects database, wherein said extracted subject is either identified among the subjects already present in said subjects database using a tracker/classifier, or added as a new subject in said subjects database.

According to another feature, the evaluating step rates each frame by a global aesthetical score and comprises at least one analyzing sub-step, said analyzing sub-step analyzing the frame with respect to one aesthetical criterion.

According to another feature, some of said analyzing sub-steps are paralleled, each analyzing sub-step being used as a rater, parallely providing a partial aesthetical score depending on a measure the frame conforms to the aesthetical criterion of said analyzing sub-step, said partial aesthetical scores being summed up to determine the global aesthetical score of the frame.

According to another feature, some of said analyzing sub-steps are cascaded, a first analyzing sub-step being used as a pass/do not pass checker, carrying on the evaluating step with the others analyzing sub-steps when the frame conforms to the aesthetical criterion of said first analyzing sub-step and stopping the evaluating step when not.

According to another feature, an analyzing sub-step tests whether said subject is located on at least one line of third, defined as a horizontal or vertical line dividing the frame in three equal parts, preferably on two parallel lines of third and more preferably on at least one point of intersection between two lines of third.

According to another feature, an analyzing sub-step tests whether a ratio between the size of said subject and the size of the frame is comprised between two thresholds.

According to another feature, an analyzing sub-step tests whether a direction associated to said subject points toward the center of the frame.

According to another feature, said subject comprises at least one eye and the direction associated to said subject is a gaze direction from said at least one eye, as obtained from gaze analysis.

According to another feature, said subject comprises no eye and the direction associated to said subject is the moving direction of said subject, as obtained from motion detection.

According to another feature, an analyzing sub-step tests whether a skyline is present in the frame and if said skyline is horizontal and preferably if said skyline is located on a line of third.

For said purpose, a skyline can be defined as being a line, as extracted from the frame using line extraction, crossing more than half of the frame, while keeping a rather constant color.

According to another feature, an analyzing sub-step tests whether the contrast of said subject with respect to the frame background is greater than at least one threshold.

According to another feature, the selecting step comprises the sub-steps of: weighting said aesthetical scores based on a frequency of appearance of said subject, extracting frames whose weighted score exceeds a given threshold.

A further embodiment is directed to a computer program comprising instructions adapted to perform the steps of said method.

A further embodiment is directed to a device adapted to perform said method.

### BRIEF DESCRIPTION OF THE DRAWINGS

Others features, details and advantages of the invention will become more apparent from the detailed illustrating description given hereafter with respect to the drawings on which:
Figure 1 shows an embodiment of a method of / device for extracting the most significant frames out of a video stream,
Figure 2 illustrates the aesthetical rule of thirds,
Figure 3 illustrates the aesthetical rule of subject direction,
Figure 4 illustrates the aesthetical rule of skyline location,
Figure 5 illustrates the aesthetical rule of contrast.

### DETAILED DESCRIPTION

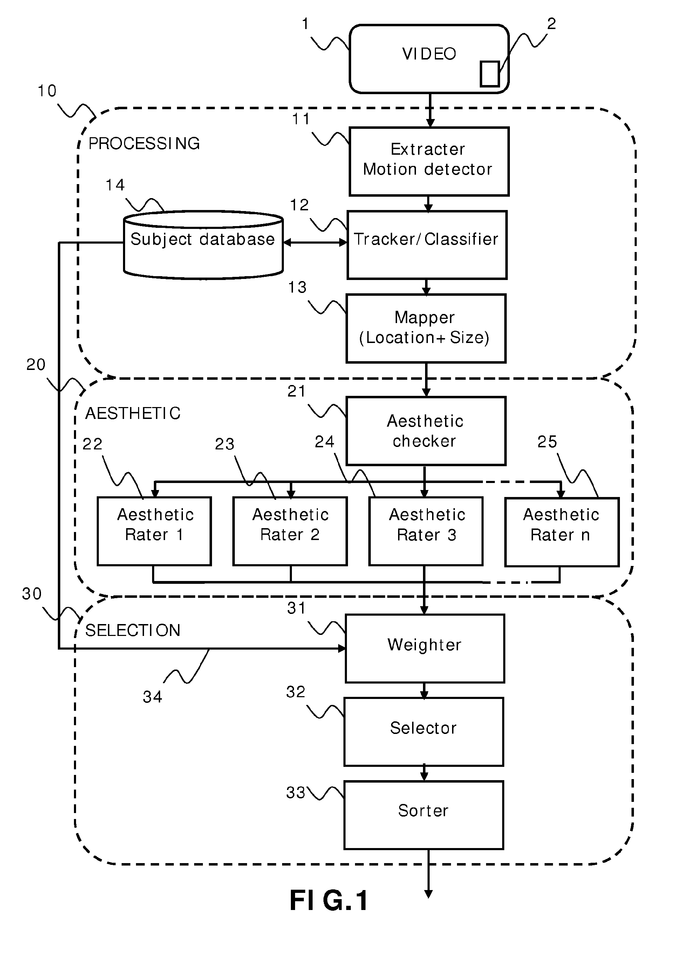

According to an embodiment, is presented a method of / a device for extracting the most significant frames 2 out of a video stream 1. A possible embodiment of a device implementing an exemplary embodiment of said method is presented in figure 1. Said method/device accepts as input a video stream 1 comprising frames 2 typically arranged sequentially according to a timeline. Said video stream 1 may be provided in any format.

Said method/device comprises a step/module 20 of evaluating each frame 2 individually based on at least one aesthetical criterion, and a step 30 of selecting frames 2 based on said evaluation.

Before the evaluation step/module 20, said device/method may comprise a preparatory or processing step/module 10, intended to ready and ease the following evaluating step/module 20. Said processing step/module 10, may be applied to each frame 2 and comprises a sub-step/sub-module of extracting 11 at least one subject 3 from the frame 2. Such extraction/extractor may be applied, e.g. by using a motion detector 11. Such motion detection 11 is applied in order to detect, in the video stream 1, any coherently moving part of a frame 2. Several such subjects 3 may so be detected. A main subject 3 is considered and extracted, e.g. based on its size (the greater) or persistence (the one appearing in the greatest number of frame). All further evaluations are applied either to all subjects 3 so extracted or only to said main subject 3. Depending on the aesthetical criterion, it may be checked, either if said main subject or if at least one subject conforms to said criterion. Alternately, rated evaluation may either evaluate how any subject conforms to said criterion or evaluate the subject 3 that best conforms to said criterion or evaluate a mean of how all subjects conform to said criterion or any other evaluation method.

The processing step/module 10 further comprises a following mapping sub-step/mapper sub-module 13 determining, for each said subject 3 its location and its size. Said size may be expressed e.g. either by a surface covered by said subject 3 or by a ratio of surface of said subject 3 relative to the whole surface of the frame 2. Said location may be expressed e.g. either by a point in the frame 2 referred by its coordinates in a frame system of axis, said point being a characteristic point of said subject 3 such as its center or any predefined point such as e.g. the righter upper most point or said location may be expressed by a contour 15 of said subject 3 defined e.g. by a set of points each defined by its coordinates. Said contour 15 may also be provided as a coarse envelope, such as a rectangle surrounding said subject 3.

According to an optional feature, the method/device may use a subjects database 14. In this case, any extracted subject 3 may be checked against the subjects contained in said subjects database 14 by means of a tracker/classifier 12. If said subject 3 is found in said subjects database 14, this allows obtaining semantic data about said subject 3, if only said semantic data were previously entered in the subjects database 14.

This may also further allows, by further recognizing said subject 3, to maintain a count of a number of appearance of said subject 3 so as to determine a frequency of appearance.

If on the contrary said subject 3 cannot be found in said subjects database 14, since a subject 3 has been identified and characterized by the motion detector 11, said subject 3 may be added as a new subject 3 in said subjects database 14. Despites in such case no semantic data can be obtained, since any new found subject 3 is so added when first encountered, said subject 3 could be recognized at its second and all subsequent occurrences. By so doing, a subjects database 14 may help maintaining a count of a number of appearance of any subject 3 so as to determine its frequency of appearance, be it a previously known subject or a subject discovered during the analysis of the video stream 1.

After said processing step/module 10, each frame 2 is transferred to the evaluating step/module 20, with its subject(s) 3 and a map of their location and size, to be aesthetically evaluated.

Said evaluating step/module 20 is designed to rate each frame 2, by e.g. allocating a global aesthetical score. To do so, said evaluating step/module 20 may comprises at least one analyzing sub-step/sub-module 21-25. Each said analyzing sub-step/sub-module 21-25 is in charge of analyzing the frame 2 with respect to one aesthetical criterion.

According to a first embodiment some of said analyzing sub-steps/sub-modules 21-25 may be paralleled. In this case, each analyzing sub-step/sub-module is used as a rater 22-25. A rater is defined in that it provides a score. Each sub-step/sub-module 22-25 used as a rater analyses the frame 2 with respect to one aesthetical criterion and provides a partial aesthetical score indicative of a measure the frame 2 conforms to the aesthetical criterion managed by said analyzing sub-step/sub-module 22-25. All partial aesthetical scores so parallely provided are then summed up to determine the global aesthetical score of the frame 2.

According to a complementary embodiment some of said analyzing sub-steps/sub-modules 21-25 may alternately be cascaded. In this case, a first analyzing sub-step/sub-module is used as a checker 21. A checker is defined in that it acts as a pass/do not pass filter. Each sub-step/sub-module 21 used as a checker analyses the frame 2 with respect to one aesthetical criterion. The analysis is quite the same as before in the case of a rater, but here the result must be binary. Either the frame 2 conforms to the aesthetical criterion of said checker analyzing sub-step/sub-module 21 or not. If the frame 2 conforms to the aesthetical criterion, the checker analyzing sub-step/sub-module 21 is passing and the evaluating step/module 20 carries on with the analysis of the frame 2 by the others following analyzing sub-steps/sub-modules 22-25. If the frame 2 does not conform to the aesthetical criterion, the evaluating step/module 20 is stopped for the current frame 2. Said current frame 2 is discarded or equivalently receives a worst aesthetical score.

A cascaded arrangement is very interesting in that it avoid losing time and computing resources, by applying all analyzing sub-steps/sub-modules 21-25, to frames 2 that can quickly be discarded by an adequately chosen checker.

As the one skilled in art can figure out, at least one last analysis sub-step/sub-module may be rater. If several analysis sub-steps/sub-modules are present they are paralleled to provide partial aesthetical scores that are summed up to determine the global aesthetical score of the frame 2. They can be preceded by any number of cascaded analysis sub-steps/sub-modules, used as checker.

It is important to notice that an analyzing sub-step/sub-module 21-25 may be used as rater, may be used as checker, or both. A rater and a checker typically share the same analysis part, and differ only when it comes to express the result. A checker may be used as a rater, rating a first higher score if the frame 2 is passing and a second lesser score if the frame 2 is not passing. Alternately, a rater provides at least two scores. So it is always possible to define a threshold between any two scores. If the score is greater than the threshold then the frame 2 is passing, if the score is lesser (or equal) than the threshold then the frame 2 is not passing.

Depending on implementation choices, any number of aesthetical criterions may be so checked/rated in the method/device. The method/device of figure 1 e.g. shows an illustrative embodiment with one checker module 21 analyzing the frame 2 with respect to an aesthetic criterion called rule of thirds which is described later, followed by n rater modules 22-25.

One of said rater modules 22-25 can again apply a same aesthetic criterion, but this time to rate the frame 2. This may be the case in the method/device of figure 1, wherein one of rater sub-steps/sub-modules 22-25 can be based again on the rule of thirds, this time to rate the frame 2. This is possible since several (in fact at least two) levels of compliance with said rule of thirds can be determined.

Until now has been described the general architecture of the method/device. The heart of said method/device is the aesthetical evaluation as applied by the checker/rater sub-steps/sub-modules 21-25 each based on one aesthetical criterion. Some examples of such aesthetical criterions and their associated checker/rater modules 21-25 will now been described in detail.

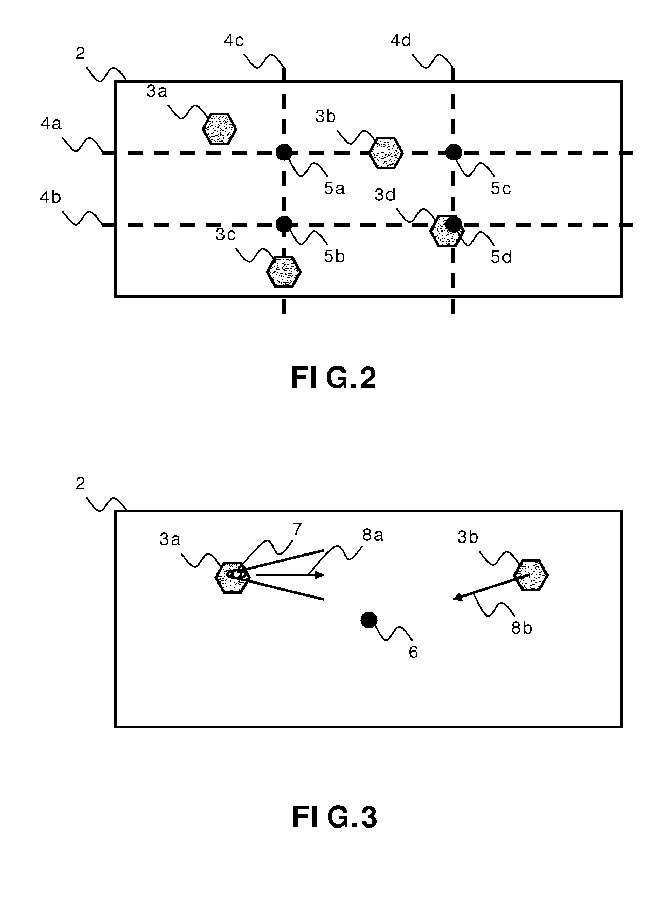

A first aesthetical criterion may be a so called "rule of thirds". Said criterion dictates that a frame 2 is aesthetically well composed if its subject 3 is located in any one of the thirds of the frame 2 be it considered horizontally or vertically. As illustrated with reference to figure 2, to evaluate said aesthetical criterion, a frame 2 is parted by four lines of third generically referred by 4 and individually referred by 4a-d. The frame 2 is divided in three equal parts by two horizontal lines 4a and 4b and is divided in three equal parts by two vertical lines 4c and 4d. The subject, generically referred by 3, and depending of its position by 3a-d, of the frame 2 has its position compared to these lines of third 4a-d. The subject 3a is not located on any one of said lines of third 4a-d. The subject 3b is located on the upper horizontal line of third 4a. The subject 3c is located on the lefter vertical line of third 4c. The subject 3d is located both on the lower horizontal line of third 4b and on the righter vertical line of third 4d, on the point 5d, being one of the four "force" points of intersection between any two lines of third 4a-d, generically referred 5 and individually referred 5a-d.

When said aesthetical criterion/analysis sub-step/sub-module is used as a checker, two cases must be considered. A frame 2 is passing, when its subject 3 is located on at least one line of third 4a-d. Within the illustrative locations, subjects 3b, 3c and 3d are passing, while 3a is not passing.

When said aesthetical criterion/analysis sub-step/sub-module is used as a rater, more than two cases can be considered. If e.g. three cases are considered, it leads to three increasing scores. A subject not located on any one of said lines of third 4a-d, such as the subject 3a, is indicative of the worst case, and, if any, would receive a worst partial aesthetical score, of e.g. 0.

A subject located on exactly one of said lines of third 4a-d, such as subjects 3b or 3c, is indicative of a good case, and would receive a good partial aesthetical score, of e.g. 1.

A subject located on one "force" point 5a-d, such as subject 3d, and consequently on at least one of said lines of third 4a-d, is also indicative of a good case, and could receive the same good partial aesthetical score, of e.g. 1. Alternately a subject located on one "force" point 5a-d and consequently on TWO non parallel of said lines of thirds 4a-d, could also be considered indicative of a better case, and could thus receive a better partial aesthetical score, of e.g. 2.

In case where a subject 3 is of bigger size so as to be located simultaneously over two parallel lines of third 4a-d, either the two horizontal or the two vertical ones, it could receive a better partial aesthetical score than in a single line case.

Here all four lines of third 4a-d have been considered equal. According to another embodiment, a better/worse score could be allocated to horizontal lines 4a-b than to vertical lines 4c-d. Similarly, a better/worse score could be allocated to the left line 4c, respectively to the upper line 4a than to the right line 4d, respectively to the lower line 4b.

Similarly, all four points 5a-d have been considered equal. According to another embodiment, a better/worse score could be allocated to the upper points 5a, 5c, respectively to the lefter points 5a-b, than to the lower points 5b, 5d, respectively to the righter point 5c-d. Alternately a different decreasing score could be allocated to each "force" point 5a-d, based on a privileged reading order. E.g. for a reading order from left to right and from top to bottom, point 5a would receive a better score than point 5c, itself receiving a better score than point 5b, itself receiving a better score than point 5d. Generally however, a "force" point 5a-d case scores better than a line only case, be it one single line or two parallel lines 4a-d.

All these scoring methods can obviously be combined at will to obtain from a simplest two values score till a more detailed ten or more values score.

Another aesthetical criterion may be a so called "rule of subject proportion". Said criterion dictates that a frame 2 is aesthetically well composed if its subject 3 is occupying a surface of the frame 2 corresponding to a given ratio, not too small and not too big. To evaluate said aesthetical criterion, the surface occupied by the subject 3 may be compared to the whole surface of the frame 2. The surface of the subject 3 can be obtained from the map provided by the processing step/module 10 if available, or can be derived from subject analysis, e.g. based from a contour 15 of said subject 3. The ratio size of subject to size of frame so obtained can then be compared to two thresholds. Two possible thresholds, corresponding to well admitted aesthetical reasonable proportion can e.g. be a low threshold of 30% and a high threshold of 70%. Here only two cases are considered. In the first case the ratio is either under the low threshold or over the high threshold. The subject 3 / frame 2 is then considered as being badly proportionate and either is not passing in the case of a checker or receive a bad partial aesthetical score, of e.g. 0, in the case of a rater. In the other case the ratio is comprised between the low threshold and the high threshold. The subject 3 / frame 2 is then considered as being well proportionate and either is passing in the case of a checker or receive a good partial aesthetical score, of e.g. 1. More cases, and thus more detailed partial aesthetical scores, only in the case of a rater, could be graduated by parting the 30-70% range into concentric ranges considered to be corresponding to better proportionate subject 3 / frame 2.

Another aesthetical criterion may be a so called "rule of subject direction". Said criterion dictates that a frame 2 is aesthetically well composed if a direction 8 associated to its subject 3 is pointing toward the center 6 of the frame 2. As illustrated with reference to figure 3, to evaluate said aesthetical criterion, said direction, generically referred by 8 and individually referred by 8a-b, is compared to said center 6 of the frame 2.

Here only two cases may e.g. be considered. In the first case the direction 8 is not pointing toward the center 6 of the frame 2. The subject 3 / frame 2 is then considered as being bad composed and either is not passing in the case of a checker or receive a bad partial aesthetical score, of e.g. 0, in the case of a rater. In the other case the direction 8 is pointing toward the center 6 of the frame 2. The subject 3 / frame 2 is then considered as being well composed and either is passing in the case of a checker or receive a good partial aesthetical score, of e.g. 1.

More cases, and thus more detailed partial aesthetical scores, only in the case of a rater, could be graduated depending on a measure the direction 8 is pointing or not toward the center 6 of the frame 2.

Said aforementioned direction 8 is considered to leads the reading of the frame 2 by a viewer. Preferably, if a character is present and is the subject 3 of said frame 2, said direction 8 is given by the direction of its gaze. Alternately, said direction 8 may also be given by the motion of the subject 3. Accordingly, said direction 8, may be obtained at least by two ways. First an eye 7 is searched in the subject 3 / frame 2. This can be done by already known dedicated methods. If at least one eye 7 is found, as illustrated by subject 3a in figure 3, the subject 3a and its at least one eye 7 is further analyzed to obtain a gaze direction of said eye 7. This can be done by already dedicated methods/devices known as gaze analysis/analyzer. Said so obtained gaze direction is an oriented direction 8a. Its direction can then be compared to the center 6 of the frame 2.

Alternately, if no eye 7 can be found in the subject 3, as illustrated by subject 3b in figure 3, because either the subject 3 is not a character or its eye(s) 7 are not visible, said subject 3b is further analyzed to obtain its moving direction 8b. This can be done by already known methods/devices such as motion detection/detector. Said so obtained moving direction is an oriented direction 8b. Its direction can then be compared to the center 6 of the frame 2.

As illustrated in figure 3, the gaze direction 8a of subject 3a is not pointing toward the center 6 of the frame 2, while the moving direction 8b of subject 3b is pointing toward the center 6 of the frame 2.

Here both cases, gaze direction and moving direction, have been considered equal. According to another embodiment, a better/worse score could be allocated to any one of them.

Another aesthetical criterion may be a so called "rule of skyline direction". Said criterion dictates that a frame 2 is aesthetically well composed if it comprises a skyline 9c, and even better if said skyline 9c is parallel to a horizontal side of the frame 2, and even better if said skyline is located on a line of third 4a-b.

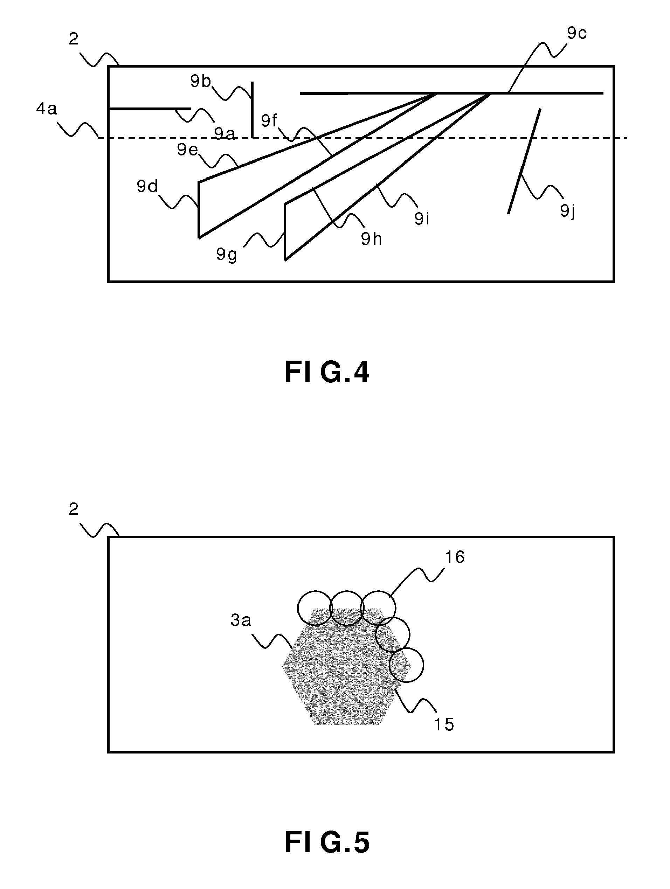

As illustrated in figure 4, to evaluate said aesthetical criterion, a frame 2 is analyzed to find, if any, a skyline 9c. If said criterion is used as a checker, it can be passing if a skyline 9c is present. If said criterion is used as a rater, several cases may be distinguished, leading to several increasing partial aesthetical scores. If not skyline can be found, the worst score may be allocated, e.g. 0. If a skyline 9c is found which is not horizontal, the worst score, or a slightly better score, of e.g. +1 bonus, may be allocated. If a skyline 9c is found and is horizontal a better score, of e.g. +1 bonus, may be allocated. If said either horizontal skyline 9c is additionally located on a line of third 4a-b an additional bonus of e.g. +1, may be allocated.

The previous checking/rating supposes that a skyline 9c has been searched for. To do so, the frame 2 is analyzed to extract all the lines, generically referred 9 and individually referred 9a-j. Such a line extraction may be done by any method. A known Hough transform can be applied to do so. Among these lines 9a-j at least one skyline 9c is searched.

A line 9a-j is a skyline 9c if it crosses more than half of the frame 2, while keeping a rather constant color. All extracted lines 9a-j are then tested according to both their length as compared to the dimensions of the frames and their color uniformity.

Figure 4 shows an example of a so analyzed frame 2 resulting in ten lines 9a-j. All of these lines 9a-j are potential skyline candidates. Among these lines, lines 9a, 9b, 9d, 9g and 9j are too short, being shorter than an half of the frame 2, and are thus rejected. Lines 9c, 9e, 9f, 9h and 9i are long enough and can thus be tested against the color condition. Despites not visible on the monochrome figure, let us assumes that only line 9c verifies the color condition. After said skyline analysis, line 9c is the only line that can be considered to be a skyline.

Said skyline 9c is then compared to the horizontal. Here in the example of figure 4, skyline 9c is horizontal and thus obtains an increased score. However said skyline 9c is not located on the line of third 4a and thus does not obtain the best score.

Another aesthetical criterion may be a so called "rule of subject contrast". Said criterion dictates that a frame 2 is aesthetically well composed if its subject 3 presents a sufficient contrast with reference to the background, that is, a contrast value greater than at least one threshold.

With a single threshold such a sub-step/sub-module can be used as a checker, or as a rater able to provide two partial scores. With several thresholds such a sub-step/sub-module can be used as a rater able to provide more than two partial scores.

As an example, with two thresholds, a first contrast threshold being S1 = 30% and a second contrast threshold being S2 = 70%, a frame 2 whose subject 3 present a contrast lesser than S1 could receive a score of e.g. 0, a frame 2 whose subject 3 present a contrast comprised between S1 and S2 could receive a score of e.g. 1 and a frame 2 whose subject 3 present a contrast greater than S2 could receive a score of e.g. 2.

The analysis of the contrast can be made by any method. A possible method is described here with reference to figure 5. The subject 3a is considered. Its contour 15 is parted in cells 16. A color gradient is measured in each cell 16. For each cell 16, a gradient color threshold Sc of e.g. 20% is considered. The number of cells whose color gradient is greater than said threshold Sc gives a contrast number, in percentage of the total number of cells 16.

Previously described aesthetical sub-steps/sub-modules correspond to the main aesthetical criterions and are provided as exemplary ones. They are sufficient to build a satisfactory extracting device/method. However other sub-steps/sub-modules/aesthetical criterions can be added as necessary, either as checker or as rater.

At the end of the evaluating step/device 20, each frame 2 is associated to a global aesthetical score. Based on this global aesthetical score the selection step/device 30 can begin. Said selecting step/device 30 comprises at least a selecting sub-step/sub-module 32. Said selecting sub-step/sub-module 32 keeps only the frames 2 whose score is greater than a given selecting score. Said selecting score is determined based on an objective. Said objective may be expressed as a minimum/maximum number of frames to keep, respectively to discard, or as a ratio of frames to keep, respectively to discard, per second.

According to another embodiment, before selecting the frames 2, global aesthetical scores may be weighted. This is done by a weighting sub-step/weighter sub-module 31. Said weighting may be based on several criterions.

According to a first criterion, said weighting is based on a subject frequency of appearance. Said frequency of appearance is computed for each subject 3, as recognized in sub-step/sub-module tracker 12, through the use of said subjects database 14. According to a possible embodiment a frequency score is provided to each subject 3 and thus to its containing frame 2. Such frequency score is e.g. linearly representative of the frequency of appearance, e.g. with respect to the most frequent subject receiving the maximum frequency score. Such an approach favors a frequently appearing subject 3.

Alternately, a better frequency score could be associated to a lesser frequently subject. This approach considers that a rare subject can be the most important in a video stream 1.

According to a possible embodiment, the frequency score is designed to weight equally than the global aesthetical score. E.g. if an aesthetical score ranges from 0 to 10, the frequency score also ranges from 0 to 10. Both scores are then summed up to provide an overall score ranging from 0 to 20.

Other weighting could be used to amend the initial global aesthetical score. For example, according to another criterion, it is possible to take account of the proximity of frames 2 in a same shot. In such a case several neighbor frames 2 may appear quite redundant. Accordingly their scores could be weighted so as to increase the score of one of them, e.g. the one with the originally highest score, while lowering the scores of the others.

According to another embodiment, an optional sorting sub-step/sorter sub-module 33 can be used to sort frames 2 before selected frames 3 are delivered. An obvious sorting can be along the initial timeline, frames 2 being delivered in the same order they were in the initial video stream 1. But other orders may be used. Frames 2 may e.g. be sorted according to their score, be it the aesthetical score, the frequency score or the final score, either in ascending or descending order. Any other parameter may also be used to sort said frames 2.

Any embodiment of said method can be implemented in a device. Said device may be e.g. a computer device able to execute a computer program comprising instructions, said instructions being adapted to perform the steps of any embodiment of said method. Said computer program can be installed on a storage medium such as a memory, a tape, a CD, a DVD, a hard disk, a server or any other equivalent medium. From said storage medium, said computer program is able to be (down)loaded in order to be executed on said computer device.

## Claims

1. A method of extracting the most significant frames (2) out of a video stream (1), comprising the steps of:
- evaluating (20) each frame (2) based on at least one aesthetical criterion, and
- selecting (30) frames (2) based on said evaluation.

2. The method of claim 1, further comprising, before the evaluating step (20), a processing step (10) comprising the sub-steps of:
- extracting (11) at least one subject (3), being a coherently moving part of the frame (2), using motion detection, and
- determining (13) location and size of said subject (3).

3. The method of claim 2, further using a subjects database (14), wherein said extracted subject (3) is either identified among the subjects already present in said subjects database (14) using a tracker/classifier (12), or added as a new subject (3) in said subjects database (14).

4. The method of any one of claims 1 to 3, wherein the evaluating step (20) rates each frame (2) by a global aesthetical score and comprises at least one analyzing sub-step (21-25), said analyzing sub-step (21-25) analyzing the frame (2) with respect to one aesthetical criterion.

5. The method of claim 4, wherein some of said analyzing sub-steps (22-25) are paralleled, each analyzing sub-step (22-25) being used as a rater, parallely providing a partial aesthetical score depending on a measure the frame (2) conforms to the aesthetical criterion of said analyzing sub-step (22-25), said partial aesthetical scores being summed up to determine the global aesthetical score of the frame (2).

6. The method of any one of claims 4 or 5, wherein some of said analyzing sub-steps (21-25) are cascaded, a first analyzing sub-step (21) being used as a pass/do not pass checker, carrying on the evaluating step (20) with the others analyzing sub-steps (22-25) when the frame (2) conforms to the aesthetical criterion of said first analyzing sub-step (21) and stopping the evaluating step (20) when not.

7. The method of any one of claims 4 to 6, wherein an analyzing sub-step (21-25) tests whether said subject (3) is located on at least one line of third (4a-d), defined as a horizontal or vertical line dividing the frame (2) in three equal parts, preferably on two parallel lines of third (4a-d) and more preferably on at least one point (5a-d) of intersection between two lines of third (4a-d).

8. The method of any one of claims 4 to 7, wherein an analyzing sub-step (21-25) tests whether a ratio between the size of said subject (3) and the size of the frame (2) is comprised between two thresholds.

9. The method of any one of claims 4 to 8, wherein an analyzing sub-step (21-25) tests whether a direction (8) associated to said subject (3) points toward the center (6) of the frame (2).

10. The method of claim 9, wherein said subject (3) comprises at least one eye (7) and the direction (8) associated to said subject (3) is a gaze direction from said at least one eye (7), as obtained from gaze analysis.

11. The method of claim 9, wherein said subject (3) comprises no eye and the direction (8) associated to said subject is the moving direction of said subject (3), as obtained from motion detection.

12. The method of any one of claims 4 to 11, wherein an analyzing sub-step (21-25) tests whether a skyline (9c) is present in the frame (2) and if said skyline (9c) is horizontal and preferably if said skyline (9c) is located on a line of third (4a-b).

13. The method of any one of claims 1 to 12, wherein the selecting step (30) comprises the sub-steps of:
weighting (31) said aesthetical scores based on a frequency of appearance of said subject (3),
extracting (32) frames (2) whose weighted score exceeds a given threshold.

14. A computer program comprising instructions adapted to perform the steps of the method according to claims 1 to 13.

15. A device adapted to perform the method according to claims 1 to 13.
